# FASCICULE DE BREVET EUROPEEN

(11) **EP 2 424 952 B1**
(45) Date de publication et mention de la délivrance du brevet: **10.07.2019**
(21) Numéro de dépôt: 10703080.1
(22) Date de dépôt: 10.02.2010
(51) Int. Cl.: C09K 8/584

(54) **COMPOSITION VISCOELASTIQUE A VISCOSITE AMELIOREE**
VISKOELASTISCHE ZUSAMMENSETZUNG MIT VERBESSERTER VISKOSITÄT
VISCOELASTIC COMPOSITION WITH IMPROVED VISCOSITY

(30) Priorité: 19.03.2009 FR 0901282
(43) Date de publication de la demande: 07.03.2012
(73) Titulaire: Rhodia Opérations, 93306 Aubervilliers (FR)
(72) Inventeur: DEGRE, Guillaume, F-33400 Talence (FR); MORVAN, Mikel, F-33600 Pessac (FR)
(74) Mandataire: Lavoix
(86) Numéro de dépôt international: PCT/EP2010/051633
(87) Numéro de publication internationale: WO 2010/105879

(56) Documents cités:
- US-A1- 2003 040 546
- US-A1- 2006 128 597
- US-A1- 2007 107 897

## Description

La présente invention concerne une composition viscoélastique à viscosité améliorée.

L'invention concerne l'utilisation de fluides viscoélastiques dans la technique de récupération assistée du pétrole brut présent dans des formations souterraines. Ces fluides sont obtenus par addition/dissolution d'un mélange spécifique de tensioactifs zwitterioniques viscosants conférant aux dits fluides des propriétés viscoélastiques à viscosité améliorée. L'invention concerne aussi des formulations utilisables pour des méthodes de récupération assistée du pétrole.

Dans le cadre de la production de pétrole brut, ou huile, des formations souterraines, il existe différentes méthodes pour optimiser l'extraction d'huile originale en place, en anglais OOIP pour « original oil in place ».

La méthode de production primaire de pétrole brut consiste, une fois le puits foré, à récupérer le pétrole brut par migration du pétrole de la formation de roche ou du sable, vers un puits de plus basse pression, puis le pomper vers la surface, via un puits « producteur ». La production primaire est de ce fait la méthode la moins chère d'extraction. On récupère typiquement seulement 10 à 15 % d'OOIP. Néanmoins, au fur et à mesure que le pétrole est pompé, la pression diminue et l'extraction devient plus difficile.

Des méthodes secondaires de production sont alors employées quand la pression souterraine devient insuffisante pour déplacer le pétrole restant. La technique la plus commune, l'inondation (waterflooding) utilise des puits d'injecteurs qui poussent un fluide pousseur constitué de grands volumes de l'eau sous pression dans la zone contenant le pétrole. Lors de sa migration de la zone vers un ou plusieurs puits producteur(s), l'eau injectée entraîne une partie du pétrole qu'elle rencontre. A la surface, le pétrole est séparé de l'eau injectée. L'inondation permet de récupérer des 10 à 30% additionnel d'OOIP.

Quand l'inondation (waterflooding) atteint le point où la production n'est plus rentable, une décision doit être prise: le changement de champ de pétrole, ou le recours à une autre phase d'exploitation. On peut alors utiliser une technique de récupération assistée utilisant l'inondation dans laquelle l'eau comprend des agents tensioactifs et/ou des polymères. Ces polymères sont utilisés pour augmenter la viscosité du fluide pousseur et améliorer ainsi le balayage du pétrole par le fluide pousseur. Il est par exemple connu d'augmenter la viscosité de l'eau au moyen d'agents viscosants comme des polyacrylamides partiellement hydrolysés de haut poids moléculaire. Cependant ces polymères acryliques présentent une stabilité insuffisante quand le fluide pousseur présentent une salinité et des températures d'utilisation supérieures à 80/100°C.

Ces tensioactifs, dispersables et/ou solubles dans l'eau, au contact avec le pétrole contenu dans la roche ou le sable, abaissent la tension interfaciale eau/huile, pour permettre d'entraîner l'huile piégée dans les rétrécissements des pores du réservoir.

Il est ainsi connu d'injecter un fluide pousseur qui permette à la fois de réduire la tension inter faciale eau-huile en dessous de 1 mN/m et de maintenir, dans les conditions de température et de salinité du réservoir, une viscosité de 10 cps à un cisaillement de 10 s⁻¹ pour une concentration en tensioactif inférieure à 1% poids comme décrit dans les brevets des Etats-Unis d'Amérique US 2007/0107897, US 2007/0142235 et US 7461694.

En particulier, US 2007/0107897 décrit un procédé de récupération de pétrole à partir d'un réservoir, comprenant une étape d'introduction d'un liquide pousseur dans le réservoir et une étape d'extraction du pétrole à un endroit différent de celui où le liquide pousseur a été introduit, ledit liquide pousseur comprenant de l'eau et un ou plusieurs tensioactifs viscoélastiques.

US 2006/0128597 décrit une méthode pour réduire le temps de récupération au cisaillement de systèmes fluides d'un tensioactif viscoélastique, notamment zwitterionique, par adjonction d'un activateur de rhéologie.

Les tensioactifs zwitterioniques et notamment les bétaines sont préférablement utilisés du fait de leur stabilité dans des saumures. Le terme zwitterionique décrit des tensioactifs ayant une charge positive permanente indépendamment du pH et ayant une charge négative au-delà d'un certain pH. Toutefois ces tensioactifs peuvent se dégrader au cours de leur utilisation à des températures supérieures à 80/100°C dans les réservoirs salins de pétrole et le fluide pousseur peut alors subir une perte de son pouvoir viscosant.

Il existe donc toujours un besoin pour des compositions viscoélastiques présentant des propriétés modifiées et améliorées, notamment:
Une bonne stabilité à force ionique relativement élevée, dans un milieu relativement et même très salin comportant 1, 3, 10 et même jusqu'à 20% en poids de sels, généralement des sels d'alcalins et d'alcalino-terreux, ledit milieu restant pompable après avoir été viscosé.

Une bonne tenue de la stabilité et/ou de l'épaississement à température relativement élevée et allant de 50°C, par exemple jusqu'à 70°C et même 120°C et au-delà, et

Un pouvoir viscosant le plus efficace possible à des teneurs les plus faibles en tensioactifs zwitterioniques viscosants, et

une conjonction et/ou compromis amélioré d'au moins deux de ces propriétés.

Ces buts, et d'autres, sont atteints par la présente invention qui concerne en effet une méthode de récupération assistée du pétrole d'une formation souterraine comprenant au moins les étapes suivantes :
a) on injecte, par au moins un moyen d'injection en contact avec la formation souterraine contenant le pétrole, un liquide pousseur comprenant en mélange au moins :
   1) un milieu aqueux salifié, et
   2) un mélange de 2 tensioactifs zwitterioniques viscosants ou un mélange de 2 populations de ces tensioactifs, présentant un caractère bimodal de distributions étroites des groupes R₁ tel que défini ci-dessous, suivant une teneur en poids comprise entre 1 et 0.05% en poids, de préférence entre 0.5 et 0.1%, de façon encore plus préférée entre 0.4 et 0.15%, le liquide pousseur présentant une tension interfaciale huile/eau d'environ 10 mN/m (milinewton par mètre) ou moins mesurée à température ambiante (25°C) et une viscosité d'environ 10 cPs ou plus, mesurée à température ambiante (25°C) et pour un gradient de cisaillement de 10 s⁻¹, les tensioactifs répondant à la formule (1): 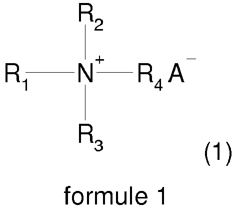 dans laquelle :
      A⁻ représente les groupes carboxylate COO⁻ ou sulfonate SO₃⁻,
      R₁ représente une partie hydrophobe d'un groupe alkyle, alkoxyalkyle, alkylaminoalkyle et alkylamidoalkyle, linéaires ou ramifiés, saturés ou, de préférence, insaturés, contenant environ de 16 à 30, de préférence de 18 à 28 atomes de carbone, les 2 radicaux R₁ des 2 tensioactifs ou des 2 populations de tensioactifs présentant une différence de leur nombre d'atomes de carbone au moins égal ou supérieur à 4.
      R₂ et R₃ représentent indépendamment une chaîne aliphatique ayant de 1 à 30 atomes de carbone, de préférence de 1 à 20 atomes de carbone, de façon plus préférée de 1 à 10 atomes de carbone, et de façon encore plus préférée de 1 à 6 atomes de carbone, ledit groupe aliphatique pouvant être droit ou ramifié, saturé ou insaturé, les groupes R₂ et R₃ préférés étant les goupes méthyle et hydroxyméthyle, éthyle et hydroxy-2 éthyle, propyle et hydroxy-3 propyle, et
      R₄ est un groupe alkylène ayant de 1 à 4 atomes de carbone, éventuellement substitué par un groupe hydroxyle ; et
b) On récupère, par au moins un moyen de production situé à un endroit différent de celui ou le fluide pousseur a été introduit, ledit liquide comprenant le pétrole.

De manière totalement surprenante et inattendue, la présente invention a permis de montrer que l'utilisation d'un mélange de 2 tensioactifs ou de 2 populations de tensioactifs zwitterioniques viscosants tels que définis ci-dessus permet d'améliorer de façon sensible la viscosité du mélange et donc du fluide aqueux pousseur. De plus ce fluide comportant ce mélange présente également une amélioration importante de sa stabilité thermique.

Des exemples spécifiques de tensioactifs viscoélastiques zwitterioniques surfactants incluent les structures suivantes:
Dans la formule (1), R₁ peut être un alkylamidopropyle, R₂ et R₃ représentent un groupe hydroxy-2 éthyle, méthyle ou éthyle, R₄ est un groupe méthylène et A un groupe carboxylate et les structures peuvent alors répondre à la formule (2) : 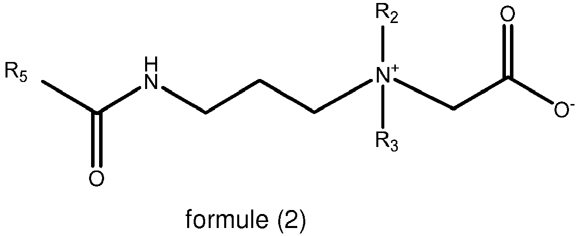 dans laquelle :
R₁ de la formule (1) est le groupe alkylamidopropyle de formule: R₅CONHCH₂CH₂CH₂ dans la formule (2) et
le groupe R₅ - C=O, est un groupe alkanoyle en C₁₂-C₂₄.. Ce groupe alkanoyle en C₁₂-C₂₄ est choisi notamment parmi les groupes dodécanoyle, tetradécanoyle (myristoyle), hexadécénoyle (cétoyle), octadécènoyle (oléoyle), octadécanoyle (stéaroyle), et docosénoyle (érucoyle) .

Selon une autre variante d'exécution, dans la formule (1), R₁ est un alkylamidopropyle et le groupe R₅ - C=O, est un groupe alkanoyle en C₁₂-C₂₄ choisi notamment parmi les groupes dodécanoyle, tetradécanoyle (myristoyle), hexadécénoyle (cétoyle), octadécènoyle (oléoyle), octadécanoyle (stéaroyle), et docosénoyle (érucoyle).

R₂ et R₃ représentent un groupe hydroxy-2éthyle, méthyle ou éthyle, R₄ un groupe propylidène optionnellement hydroxylé et A un groupe sulfonate et peuvent alors par exemple répondre à la formule (3) : 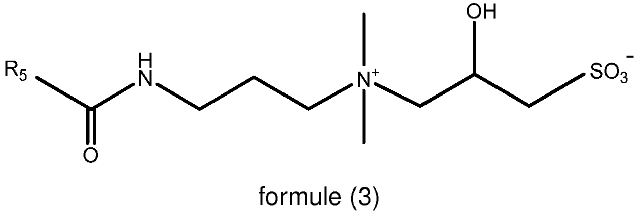 dans laquelle R₂ et R₃ de la formule (1) représentent un méthyle dans la formule (3), R₄ de la formule (1) un groupe hydroxy-propylidène dans la formule (3) et A de la formule (1) un groupe sulfonate dans la formule (3).

Selon une autre variante d'exécution, dans la formule (1), R₁ est un groupe alkyle en C₁₂-C₂₄ préférentiellement choisi parmi les groupes dodécyle (lauryl), tétradécyle (myristyle), hexadécyle (cétyle), octadécényle (oléyle), octadécyle (stéaryle), docosénoique (érucyle),

R₂ et R₃ représentent un groupe hydroxy-2 éthyle, méthyle ou éthyle, R₄ est un groupe méthylène et A un groupe carboxylate et les tensio-actifs viscosants peuvent alors répondre à la formule (4) :

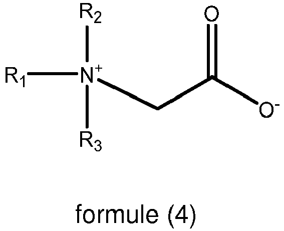

Selon une autre variante d'exécution, dans la formule (1), R₁ est un groupe alkyle en C₁₂-C₂₄ préférentiellement choisi parmi les groupes dodécyle (lauryl), tétradécyle (myristyle), hexadécyle (cétyle), octadécényle (oléyle), octadécyle (stéaryle), docosénoique (érucyle), R₂ et R₃ représentent un groupe hydroxy-2éthyle, méthyle ou éthyle, R₄ un groupe propylidène optionnellement hydroxylé et A un groupe sulfonate et et les tensio-actifs viscosants peuvent alors par exemple répondre à la formule (5) : 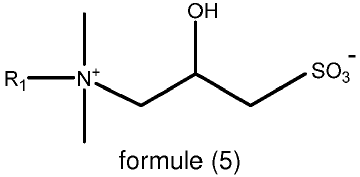 dans laquelle R₂ et R₃ de la formule (1) représentent un méthyle dans la formule (5), R₄ de la formule (1) un groupe hydroxy-propylidène dans la formule (5) et A de la formule (1) un groupe sulfonate dans la formule (5).

Selon une variante préférée, dans la formule (1), le groupe R₁ comporte au moins une insaturation éthylénique.

De plus, les deux radicaux R₁ peuvent présenter une différence de leur nombre d'atomes de carbone au moins égal ou supérieur à 4 et inférieur ou égal à 10. De préférence les 2 tensioactifs zwitterioniques viscosants sont des homologues, l'un inférieur et l'autre supérieur, c'est-à-dire qu'ils présentent la même formule chimique et se différencient uniquement par leur nombre de carbone dans le groupe R₁. Par ailleurs les 2 tensioactifs zwitterioniques viscosants sont présents dans le liquide pousseur injecté suivant un rapport pondéral dans ledit liquide de 1 à 20, de préférence de 1 à 10, et de façon encore plus préférée de 1 à 5.

Des exemples de tensioactifs recommandés pour la mise en oeuvre de l'invention sont plus particulièrement décrits dans les brevets US 7461694 et US 6831108.

Au lieu d'utiliser un mélange de 2 tensioactifs zwitterioniques viscosants bien définis, il est aussi possible d'utiliser un mélange de 2 populations de ces tensioactifs présentant un caractère bimodal de distributions étroites des groupes R₁ en chaînes alkyles (par exemple 80% d'espèce ayant une même longueur de chaîne), respectivement centrées sur 2 valeurs du nombre de carbone des groupes R₁ (par exemple 18 et 22), dont la différence conduit à un nombre d'atomes de carbone au moins égal ou supérieur à 4 atomes de carbone. La présente invention a permis de mettre en évidence une double synergie du mélange par rapport à un (ou une population) de tensioactif(s) utilisé seul, toutes choses étant égales par ailleurs et en particulier la teneur globale en tensioactifs dans le liquide pousseur injecté. Cette synergie se situe au niveau de la viscosité du liquide qui est augmentée de façon sensible et peut être plus que doublée

Cet effet de synergie sur la viscosité se traduit donc par une augmentation sensible de la viscosité, comparativement à celle obtenue dans les mêmes conditions de concentration avec un seul des deux tensioactifs. L'effet de synergie sur la viscosité est obtenu dans une large gamme de cisaillement et notamment à des gradients de vitesses caractéristiques de la vitesse de propagation des fluides dans un réservoir hydrocarboné (1 à 100 s⁻¹).

Cet effet de synergie sur la viscosité, s'observe préférentiellement pour une concentration totale en tensioactif zwitterionique inférieure à 1% poids en solution aqueuse, plus préférentiellement inférieure à 0.5% poids et encore plus préférentiellement entre 0.1 et 0.4% poids. L'effet de synergie est observé indépendamment de la salinité du milieu (eau douce, eau de mer, saumure concentrée à 100 g/l) et de la température.

Le caractère unique de l'invention est que la solution viscoélastique obtenue à partir du mélange spécifique de tensioactifs zwitterioniques permet d'atteindre dans des saumures des niveaux de viscosité élevés à très basse concentration en tensioactifs. Ces niveaux de viscosité observés dans des saumures (i.e. eau de mer) sont supérieurs à ceux obtenus avec les polyacrylamides partiellement hydrolysés de haute masse molaire, servant de référence dans les opérations de récupération assistée des hydrocarbures.

Le liquide pousseur injecté peut contenir en outre :
3) un alcool ou un polyol à une teneur en poids dans le liquide similaire à celle des tensioactifs, c'est-à-dire de 0.05 à 1%, de préférence de 0.1 à 0.5%.

Ces alcools sont de préférence l'éthanol, l'isopropanol et le propylène glycol.

Le liquide pousseur injecté peut contenir en outre :
4) un tensioactif ne conférant pas au liquide de propriété viscoélastique.

Ce tensioactif ne conférant pas au liquide de propriété viscoélastique peut être ajouté au liquide pour modifier le pouvoir viscosant et/ou pour abaisser la tension de surface du liquide et peut être choisi parmi les surfactants anioniques, cationiques, non ioniques, zwitterioniques/amphotères, seul ou en combinaison. Quand, présent dans le liquide, ce tensioactif non viscosant est présent à une teneur de 0,5% en poids ou moins, de préférence inférieure à 0,2% et même 0,1% en poids par rapport au poids du liquide, et le tensioactif zwitterionique viscosant est présent à une teneur comprise entre 0,05 et 5% en poids, de préférence entre 0.1 et 2% en poids.

Par ailleurs, l'eau du liquide pousseur injecté peut être de l'eau de mer éventuellement adoucie, une saumure, de l'eau douce ou une eau usée contenant divers métaux et éléments tels du sodium, potassium, calcium, zinc, magnésium, etc.

La présente invention vise également une méthode conforme à la présente invention selon laquelle le liquide pousseur comporte en outre:
5) une base en quantité suffisante pour porter le pH du liquide à une valeur supérieure à 10, de préférence comprise entre environ 11 et 13.

De manière totalement surprenante et inattendue, la présente invention a permis de montrer que l'ajout d'un composé alcalin au liquide pousseur permet de maintenir la viscosité initiale de la solution, au cours du vieillissement en température allant de 60 à 80°C souvent 120°C et parfois au-delà, dans des conditions aérobies. L'augmentation conséquente de pH liée à la présence du composé alcalin, n'entraîne pas par ailleurs de diminution significative de viscosité. Outre le fait que la stabilité en température soit maintenue, la présence du composé permet de réagir avec les acides organiques du pétrole brut et former ainsi au sein du réservoir des tensioactifs secondaires qui permettront de réduire davantage la tension inter faciale entre le liquide injecté et le pétrole.

Dans le cadre de cette variante de la méthode de l'invention où l'on ajoute une base, il est également recommandé d'utiliser des tensioactifs de formule (1) ci-dessus, dans lesquels le groupe R₁ comporte en outre au moins une insaturation éthylénique.

Dans le cadre de cette variante, on utilise comme milieux aqueux 1) de préférence de l'eau douce ou de l'eau de mer adoucie c'est-à-dire au moins partiellement dessalée de telle sorte que l'addition de base ne provoque pas une précipitation trop importante des sels présent dans 1) en rendant ainsi le fluide pousseur inutilisable.

La base est à une teneur dans le fluide aqueux salé à injecter suffisante pour porter le pH du liquide à une valeur supérieure à 10, de préférence comprise entre environ 11 et 13.

Comme base convenable on peut utiliser toute base de préférence minérale choisie parmi hydroxydes alcalins telle que la soude ou la potasse ou les alcalino-terreux telle l'hydroxyde de calcium. Est également utilisable l'hydroxyde d'ammonium, les carbonates tel que le carbonate ou bicarbonate de sodium et les métaborates comme le métaborate de sodium. La quantité de base varie suivant la nature des différents constituants du mélange liquide à injecter, mais elle correspond généralement à une concentration de la base dans ledit liquide comprise entre 0.0001 et 5%, de préférence entre 0.0002 et 1% en poids. La base peut être ajoutée au liquide à injecter juste avant l'emploi ou bien avant lors de la préparation du mélange alcalin. Selon un mode préféré de mise en oeuvre de l'invention, on recommande d'utiliser la soude et le carbonate de sodium.

En fait, grâce à la présence de base dans le liquide injecté, il n'est généralement pas utile d'ajouter un tensioactif 4) ne conférant pas de propriétés viscoélastiques au liquide.

Le caractère surprenant de l'invention est que la solution de tensioactif viscoélastique combinée au seul composé alcalin permet à la fois de s'affranchir de l'utilisation de capteurs d'oxygène pour garantir la stabilité chimique dans la durée du fluide pousseur dans les conditions de température de son utilisation, et de se placer dans des conditions idéales de viscosité et d'abaissement de tension interfaciale.

La présente invention vise également une méthode de récupération assistée du pétrole d'une formation souterraine dans laquelle on injecte dans ladite formation un fluide aqueux viscoélastique comprenant au moins un mélange d'au moins 2 tensioactifs zwitterioniques viscosants tels que définis ci-dessus, et l'on conduit ledit fluide à travers cette formation pour déplacer le pétrole de la formation et le récupérer par un endroit différent de celui ou le fluide aqueux viscoélastique a été introduit.

Les exemples suivants illustrent l'invention sans en limiter la portée :

### Exemple 1

On mélange 2 tensioactifs zwitterioniques dérivés d'alkyl amido propyl bétaine, l'un de formule : 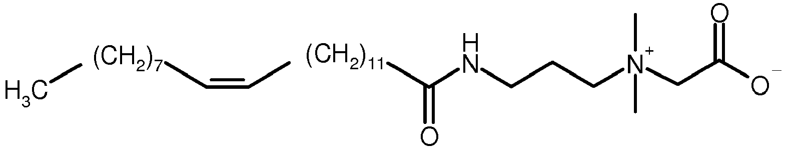 dont R₁ présente 25 atomes de carbone.

Ce produit est fait en reproduisant l'exemple 9 du brevet US 6831108 et un homologue inférieur du produit ci-dessus préparé à l'exemple 7 du brevet US 6831108 de formule : 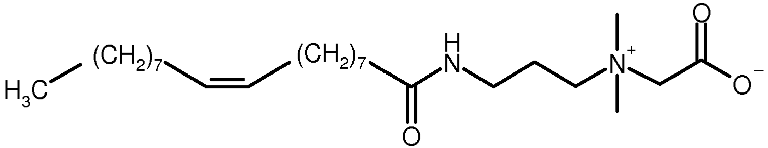 dont R₁ présente 21 atomes de carbone.

Ces 2 tensioactifs sont mis en solution dans de l'eau de mer (39 g/l de sel) à une température de 80°C. Les mesures de viscosités effectuées à un gradient de cisaillement de 10 s⁻¹ sont comparées à celles obtenues à partir d'un seul des deux tensioactifs, mesurées dans les mêmes conditions (concentration en actif, salinité, température). Les mesures qui sont rassemblées dans les tableaux 1 et 2 ci-après montrent qu'il existe un domaine de compositions permettant de doubler, voire tripler environ la viscosité.

**Tableau 1 : Rapport de viscosité de mélange de tensioactifs zwiterrioniques dans de l'eau de mer (39 g/l) à 80°C pour différentes compositions du mélange. Le rapport de viscosité est défini comme le rapport entre la viscosité du mélange des deux tensioactifs et la viscosité d'une solution contenant uniquement le tensioactif R₁ - C₂₅ à une concentration en tensioactifs égale à celle du mélange.**

| | | [R₁ - C₂₁] (w/v) | | | | |
|---|---|---|---|---|---|---|
| | | 0.05% | 0.07% | 0.10% | 0.20% | 0.30% |
| [R₁ - C₂₅] (w/v) | 0.10% | 1.05 | 0.63 | NA | NA | NA |
| | 0.20% | **2.05** | **2.04** | **1.90** | 1.21 | 0.30 |
| | 0.30% | **1.78** | **1.73** | **1.70** | 0.70 | NA |

**Tableau 2 : Rapport de viscosité de mélange de tensioactifs zwiterioniques dans une saumure équivalent à deux fois l'eau de mer (78 g/l) à 80°C pour différentes compositions du mélange. Le rapport de viscosité est défini comme le rapport entre la viscosité du mélange des deux tensioactifs et la viscosité d'une solution contenant uniquement le tensioactif R₁ - C₂₅ à une concentration en tensioactifs égale à celle du mélange.**

| | | [R₁ - C₂₁] (w/v)) | | | | | |
|---|---|---|---|---|---|---|---|
| | | 0.05% | 0.06% | 0.07% | 0.10% | 0.15% | 0.20% |
| [R₁ - C₂₅] (w/v) | 10.20% | 1.45 | **1.98** | **2.88** | **2.87** | **2.35** | **2.19** |

Du tableau 1 et 2, il apparaît qu'à concentration en tensioactifs globalement constante, le mélange de tensioactifs présente une viscosité environ entre 2 et 3 fois plus grande que celle obtenue qu'avec un seul tensioactif dans de l'eau de mer et dans une saumure équivalent à deux fois l'eau de mer.

## Revendications

1. Méthode de récupération assistée du pétrole d'une formation souterraine comprenant au moins les étapes suivantes :
a) on injecte, par au moins un moyen d'injection en contact avec la formation souterraine contenant le pétrole, un liquide comprenant en mélange au moins :
a1) un milieu aqueux salifié, et
a2) un mélange de 2 tensioactifs zwitterioniques viscosants ou un mélange de 2 populations de ces tensioactifs, présentant un caractère bimodal de distributions étroites des groupes R₁ tel que défini ci-dessous, suivant une teneur en poids comprise entre 1 et 0.05 % en poids, de préférence entre 0.5 et 0.1%, de façon encore plus préférée entre 0.4 et 0.15%, le liquide pousseur présentant une tension interfaciale huile/eau de 10 mN/m (milinewton par mètre) ou moins mesurée à température ambiante (25°C) et une viscosité de 10cPs ou plus, mesurée à température ambiante (25°C) et pour un gradient de cisaillement de 10 s⁻¹, les tensioactifs répondant à la formule (1): 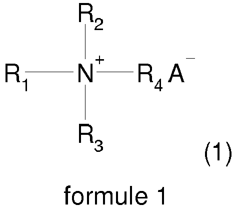 dans laquelle :
A⁻ représente les groupes carboxylate COO⁻ ou sulfonate SO₃⁻,
R₁ représente une partie hydrophobe d'un groupe alkyle, alkoxyalkyle, alkylaminoalkyle et alkylamidoalkyle, linéaires ou ramifiés, saturés ou, de préférence, insaturés, contenant de 16 à 30, de préférence de 18 à 28 atomes de carbone, les 2 radicaux R₁ des 2 tensioactifs ou des 2 populations de tensioactifs présentant une différence de leur nombre d'atomes de carbone au moins égal ou supérieur à 4.
R₂ et R₃ représentent indépendamment une chaîne aliphatique ayant de 1 à 30 atomes de carbone, de préférence de 1 à 20 atomes de carbone, de façon plus préférée de 1 à 10 atomes de carbone, et de façon encore plus préférée de 1 à 6 atomes de carbone, ledit groupe aliphatique pouvant être droit ou ramifié, saturé ou insaturé, les groupes R₂ et R₃ préférés étant les goupes méthyle et hydroxyméthyle, éthyle et hydroxy-2 éthyle, propyle et hydroxy-3 propyle, et
R₄ est un groupe alkylène ayant de 1 à 4 atomes de carbone, éventuellement substitué par un groupe hydroxyle.
b) on récupère, par au moins un moyen de production situé à un endroit différent de celui ou le polymère a été introduit, ledit liquide comprenant le pétrole.

2. Méthode selon la revendication 1, **caractérisé en ce que** dans la formule (1), R₁ est un alkylamidopropyle, R₂ et R₃ représente un groupe hydroxy-2éthyle, méthyle ou éthyle, R₄ un groupe alkylène et A un groupe carboxylate, le tensioactif viscosant répondant de préférence à la formule (2) : 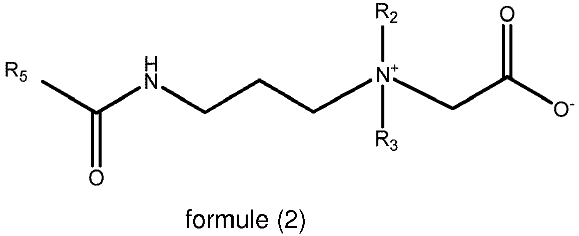 dans laquelle :
R₄ de la formule (1) représente un groupe méthylène dans la formule (2),
R₁ de la formule (1) est le groupe alkylamidopropyle de formule: R₅CONHCH₂CH₂CH₂ dans la formule (2) et
dans laquelle le groupe R₅-C=O, est un groupe alkanoyle en C₁₂-C₂₄.

3. Méthode selon la revendication 1, **caractérisé en ce que** dans la formule (1), R₁ est un alkylamidopropyle, le groupe R₅ - C=O, est un groupe alkanoyle en C₁₂-C₂₄ ;
R₂ et R₃ représentent un groupe hydroxy-2 éthyle, méthyle ou éthyle, R₄ un groupe propylidène optionnellement hydroxylé et A un groupe sulfonate et peuvent alors par exemple répondre à la formule (3) : 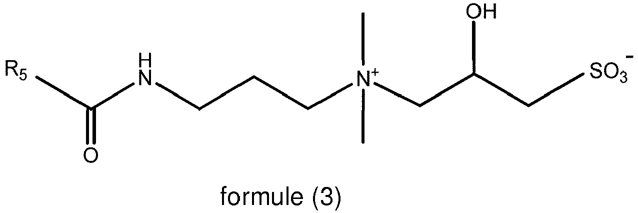 dans laquelle R₂ et R₃ de la formule (1) représentent un méthyle, R₄ de la formule (1) représente un groupe hydroxy-propylidène et A de la formule (1) un groupe sulfonate.

4. Méthode selon la revendication 1, **caractérisé en ce que** dans la formule (1), R₁ est un groupe alkyle en C₁₂-C₂₄ préférentiellement choisi parmi les groupes dodécyle (lauryl), tétradécyle (myristyle), hexadécyle (cétyle), octadécényle (oléyle), octadécyle (stéaryle), docosénoique (érucyle),
R₂ et R₃ représentent un groupe hydroxy-2 éthyle, méthyle ou éthyle, R₄ est un groupe méthylène et A un groupe carboxylate et le tensioactif viscosant répond à la formule (4) :

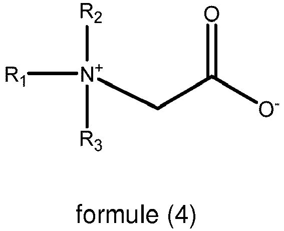

5. Procédé selon la revendication 1, **caractérisé en ce que** dans la formule (1) R₄ est un groupe propylidène optionnellement hydroxylé, A est un groupe sulfonate et le tensioactif viscosant répond par exemple à la formule (5) : 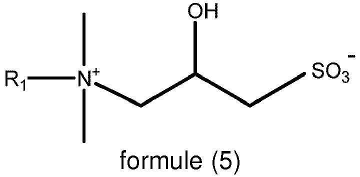 dans laquelle R₂ et R₃ de la formule (1) représentent un méthyle dans la formule (5), R₄ de la formule (1) un groupe hydroxy-propylidène dans la formule (5) et A de la formule (1) un groupe sulfonate dans la formule (5).

6. Méthode selon l'une quelconque des revendications précédentes, **caractérisée en ce que** les deux radicaux R₁ peuvent présentent une différence de leur nombre d'atomes de carbone au moins égal ou supérieur à 4 et inférieur ou égal à 10.

7. Méthode selon l'une quelconque des revendications précédentes, **caractérisée en ce que** les 2 tensioactifs zwitterioniques viscosants sont présents dans le liquide pousseur injecté suivant un rapport pondéral dans ledit liquide de 1 à 20 de préférence de 1 à 10 et de façon encore plus préférence de 1 à 5.

8. Méthode selon l'une quelconque des revendications précédentes, **caractérisée en ce que** le liquide pousseur comporte en outre :
3) un alcool ou un polyol de préférence l'éthanol, l'isopropanol et le propylène glycol, à une teneur en poids dans le liquide pousseur de 0.05 à 1%, de préférence de 0.1 à 0.5%.

9. Méthode selon l'une quelconque des revendications précédentes, **caractérisée en ce que** le liquide pousseur comporte en outre :
4) addition d'un tensioactif ne conférant pas de propriété viscoélastique au liquide.

10. Méthode selon la revendication 9, **caractérisée en ce que** le tensioactif non viscoélastique est choisi parmi les surfactants anioniques, cationiques, non ioniques, zwitterioniques/amphotères, présent à une teneur de 0,5% en poids ou moins, de préférence inférieure à 0,1% en poids par rapport au poids du liquide.

11. Méthode selon l'une des revendications 9 ou 10, **caractérisée en ce que** le tensioactif zwitterionique viscosant est présent à une teneur comprise entre 0,05 et 5% en poids, de préférence entre 0.1 et 2% en poids.

12. Méthode selon l'une quelconque des revendications 3 à 11, **caractérisée en ce que** le mélange de tensioactifs zwitterioniques viscosants est formé essentiellement d'un mélange de 2 tensioactifs de formule : 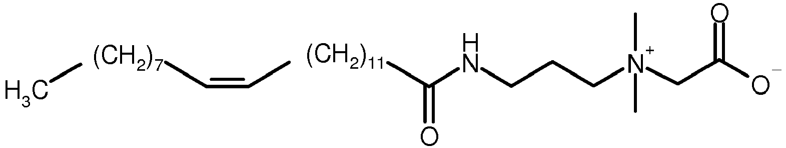 et

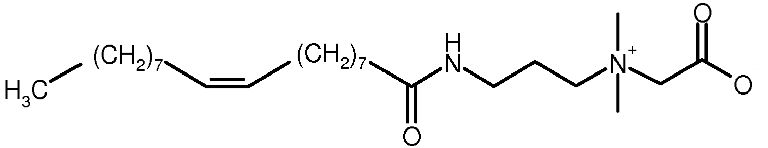

13. Méthode selon l'une quelconque des revendications précédentes, **caractérisée en ce que** le liquide pousseur comporte en outre :
5) une quantité d'une base suffisante pour porter le pH du liquide à une valeur supérieure à 10, de préférence comprise entre 11 et 13,
où la base est choisie parmi les hydroxydes alcalins, les carbonates, les bicarbonates et les métaborates, par exemple parmi la soude, la potasse, le carbonate de sodium, le bicarbonate de sodium et le métaborate de sodium.

14. Méthode selon la revendication 13, **caractérisée en ce que** la concentration de la base dans ledit liquide est comprise entre 0.0001 et 5%, de préférence entre 0.0002 et 1% en poids.

15. Méthode selon l'une quelconque des revendications 13 ou 14, **caractérisée en ce que** le groupe R₁ comporte au moins une insaturation éthylénique.

## Patentansprüche

1. Verfahren zur unterstützten Erdölrückgewinnung aus einer unterirdischen Formation, umfassend mindestens die folgenden Schritte:
a) Injizieren, mittels mindestens eines Injektionsmittels in Kontakt mit der unterirdischen Formation enthaltend Erdöl, einer Flüssigkeit umfassend in Mischung mindestens:
a1) ein salzhaltiges wässriges Medium, und
a2) eine Mischung von 2 viskosen zwitterionischen Tensiden oder eine Mischung von 2 Populationen dieser Tenside, mit einem bimodalen Charakter der engen Verteilungen der Gruppen R¹, wie nachfolgend definiert, mit einem Gewichtsgehalt zwischen 1 und 0,05 Gew.-%, vorzugsweise zwischen 0,5 und 0,1 Gew.-%, noch bevorzugter zwischen 0,4 und 0,15 Gew.-%, wobei die Schiebeflüssigkeit eine Grenzflächenspannung Öl/Wasser von 10 mN/m (Millinewton pro Meter) oder weniger, gemessen bei Raumtemperatur (25 °C), und eine Viskosität von 10 cPs oder mehr aufweist, gemessen bei Raumtemperatur (25 °C) und bei einer Scherrate von 10 s⁻¹, wobei die Tenside der Formel (1) entsprechen: 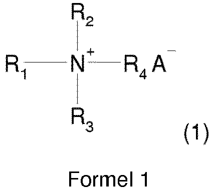 wobei:
A⁻ Carboxylat COO⁻ oder Sulfonat SO₃⁻ -Gruppen darstellt,
R₁ einen hydrophoben Teil einer linearen oder verzweigten, gesättigten oder, vorzugsweise, ungesättigten Alkyl-, Alkoxyalkyl-, Alkylaminoalkyl- und Alkylamidoalkyl-Gruppe enthaltend von 16 bis 30, vorzugsweise von 18 bis 28 Kohlenstoffatome, darstellt, wobei die 2 Radikale R₁ der 2 Tenside oder der 2 Populationen der Tenside einen Unterschied in ihrer Kohlenstoffatomanzahl von mindestens gleich oder höher als 4 aufweisen.
R₂ und R₃ unabhängig eine aliphatische Kette mit 1 bis 30 Kohlenstoffatomen, vorzugsweise 1 bis 20 Kohlenstoffatomen, noch bevorzugter 1 bis 10 Kohlenstoffatomen und noch bevorzugter 1 bis 6 Kohlenstoffatomen darstellen, wobei die aliphatische Gruppe gerade oder verzweigt, gesättigt oder ungesättigt sein kann, wobei die bevorzugten Gruppen R₂ und R₃ Methyl- und Hydroxymethyl-, Ethyl- und 2-Hydroxyethyl-, Propyl- und 3-Hydroxypropyl-Gruppen sind, und
R₄ eine Alkylen-Gruppe mit von 1 bis 4 Kohlenstoffatomen ist, wahlweise substituiert mit einer Hydroxylgruppe.
b) Rückgewinnen, mittels mindestens eines Produktionsmittels, welches sich an einer anderen Stelle befindet als diejenige, an der das Polymer eingeführt wurde, der Flüssigkeit umfassend Erdöl.

2. Verfahren gemäß Anspruch 1, **gekennzeichnet dadurch, dass**, in Formel (1), R₁ ein Alkylamidopropyl ist, R₂ und R₃ eine 2-Hydroxyethyl-, Methyl- oder Ethyl-Gruppe, R₄ eine Alkylen-Gruppe und A eine Carboxylat-Gruppe darstellen, wobei das viskose Tensid vorzugsweise der Formel (2) entspricht: 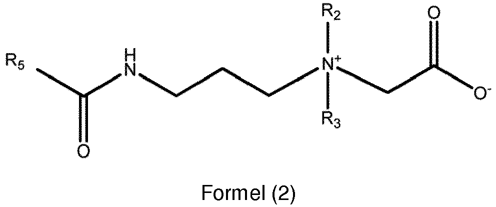 wobei:
R₄ der Formel (1) eine Methylen-Gruppe in Formel (2) darstellt,
R₁ der Formel (1) die Alkylamidopropyl-Gruppe der Formel: R₅CONHCH₂CH₂CH₂ in Formel (2) darstellt und wobei die Gruppe R₅-C=O eine Alkanoyl-Gruppe mit C₁₂-C₂₄ ist.

3. Verfahren gemäß Anspruch 1, **gekennzeichnet dadurch, dass**, in Formel (1), R₁ eine Alkylamidopropyl-Gruppe ist, die Gruppe R₅-C=O eine Alkanoyl-Gruppe mit C₁₂-C₂₄ ist; R₂ und R₃ eine 2-Hydroxyethyl-, Methyl- oder Ethyl-Gruppe, R₄ eine Propyliden-Gruppe, wahlweise hydroxyliert, und A eine Sulfonat-Gruppe darstellt und kann, beispielsweise, Formel (3) entsprechen: 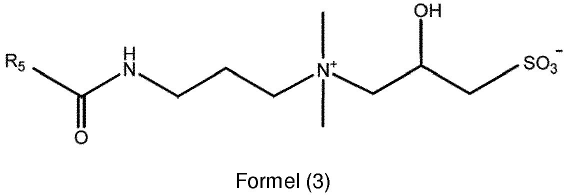 wobei R₂ und R₃ der Formel (1) Methyl darstellen, R₄ der Formel (1) eine Hydroxypropyliden-Gruppe darstellt und A der Formel (1) eine Sulfonat-Gruppe.

4. Verfahren gemäß Anspruch 1, **gekennzeichnet dadurch, dass**, in Formel (1), R₁ eine AlkylGruppe mit C₁₂-C₂₄ ist, vorzugsweise ausgewählt aus Dodecyl (Lauryl), Tetradecyl (Myristyl), Hexadecyl (Cetyl), Octadecenyl (Oleyl), Octadecyl (Stearyl), Docosen (Eruca) -Gruppen, R₂ und R₃ eine 2-Hydroxyethyl-, Methyl- oder Ethyl-Gruppe darstellen, R₄ eine Methylen-Gruppe ist und A eine Carboxylat-Gruppe, und das viskose Tensid der Formel (4) entspricht:

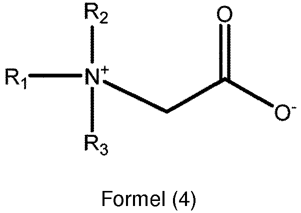

5. Verfahren gemäß Anspruch 1, **gekennzeichnet dadurch, dass**, in Formel (1), R₄ eine Propyliden-Gruppe ist, wahlweise hydroxyliert, A eine Sulfonat-Gruppe ist und das viskose Tensid beispielsweise Formel (5) entspricht: 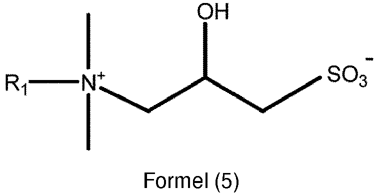 wobei R₂ und R₃ der Formel (1) Methyl in Formel (5), R₄ der Formel (1) eine Hydroxypropyliden-Gruppe in Formel (5) und A der Formel (1) eine Sulfonat-Gruppe in Formel (5) darstellt.

6. Verfahren gemäß einem der voranstehenden Ansprüche, **gekennzeichnet dadurch, dass** die zwei Radikale R₁ einen Unterschied in ihrer Kohlenstoffatomanzahl von mindestens gleich oder höher als 4 und kleiner oder gleich 10 haben können.

7. Verfahren gemäß einem der voranstehenden Ansprüche, **dadurch gekennzeichnet, dass** die 2 viskosen zwitterionischen Tenside in der injizierten Schiebeflüssigkeit in einem Gewichtsverhältnis in der Flüssigkeit von 1 bis 20, vorzugsweise von 1 bis 10 und noch bevorzugter von 1 bis 5 vorhanden sind.

8. Verfahren gemäß einem der voranstehenden Ansprüche, **gekennzeichnet dadurch, dass** die Schiebeflüssigkeit des Weiteren umfasst:
3) einen Alkohol oder ein Polyol, vorzugsweise Ethanol, Isopropanol und Propylenglycol, mit einem Gewichtsgehalt in der Schiebeflüssigkeit von 0,05 bis 1 %, vorzugsweise 0,1 bis 0,5 %.

9. Verfahren gemäß einem der voranstehenden Ansprüche, **dadurch gekennzeichnet, dass** die Schiebeflüssigkeit des Weiteren umfasst:
4) Zugabe eines Tensids, welches der Flüssigkeit keine viskoelastische Eigenschaft verleiht.

10. Verfahren gemäß Anspruch 9, **gekennzeichnet dadurch, dass** das nicht-viskoelastische Tensid ausgewählt ist aus anionischen, kationischen, nicht-ionischen, zwitterionischen/amphoteren Tensiden, mit einem Gehalt von 0,5 Gew.-% oder weniger, vorzugsweise kleiner als 0,1 Gew.-%, bezogen auf das Gewicht der Flüssigkeit.

11. Verfahren gemäß einem der Ansprüche 9 oder 10, **gekennzeichnet dadurch, dass** das viskose zwitterionische Tensid mit einem Gehalt zwischen 0,05 und 5 Gew.-%, vorzugsweise zwischen 0,1 und 2 Gew.-% enthalten ist.

12. Verfahren gemäß einem der Ansprüche 3 bis 11, **gekennzeichnet dadurch, dass** die Mischung der viskosen zwitterionischen Tenside im Wesentlichen aus einer Mischung von 2 Tenside der Formel: 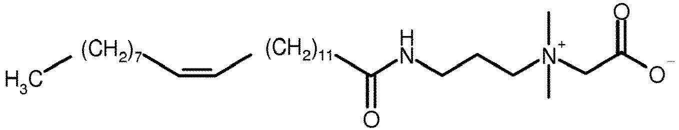 und 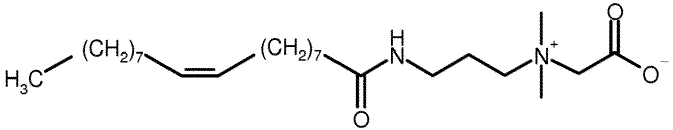 gebildet ist.

13. Verfahren gemäß einem der voranstehenden Ansprüche, **gekennzeichnet dadurch, dass** die Schiebeflüssigkeit des Weiteren umfasst:
5) eine Menge einer Base, die ausreicht, um den pH der Flüssigkeit auf einen Wert von mehr als 10, vorzugsweise zwischen 11 und 13, zu bringen,
wobei die Base ausgewählt ist aus Alkalihydroxyden, Carbonaten, Bicarbonaten und Metaboraten, beispielsweise aus Soda, Pottasche, Natriumcarbonat, Natriumbicarbonat, und Natriummetaborat.

14. Verfahren gemäß Anspruch 13, **gekennzeichnet dadurch, dass** die Konzentration der Base in der Flüssigkeit zwischen 0,0001 und 5 Gew.-%, vorzugsweise zwischen 0,0002 und 1 Gew.-% beträgt.

15. Verfahren gemäß einem der Ansprüche 13 oder 14, **gekennzeichnet dadurch, dass** die Gruppe R₁ mindestens eine ethylenische Ungesättigtkeit umfasst.

## Claims

1. Method for the assisted recovery of oil from a subterranean formation, comprising at least the following steps:
a) there is injected, using at least one injection means in contact with the subterranean formation containing the oil, a fluid comprising, in admixture, at least:
a1) a salt-containing aqueous medium, and
a2) a mixture of 2 viscosifying zwitterionic surfactants or a mixture of 2 populations of those surfactants, exhibiting a narrow bimodal distribution of the R₁ groups as defined hereinbelow, in an amount by weight of between 1 and 0.05% by weight, preferably between 0.5 and 1%, yet more preferably between 0.4 and 0.15%, the pushing fluid having an oil/water interfacial tension of 10 mN/m (millinewtons per metre) or less, measured at ambient temperature (25°C), and a viscosity of 10 cPs or more, measured at ambient temperature (25°C) and for a shear gradient of 10 s⁻¹, the surfactants corresponding to formula (1): 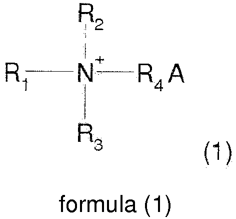 wherein:
A⁻ represents the groups carboxylate COO⁻ or sulfonate SO₃⁻,
R₁ represents a hydrophobic moiety of a linear or branched, saturated or, preferably, unsaturated alkyl, alkoxyalkyl, alkylaminoalkyl or alkylamidoalkyl group containing from 16 to 30, preferably from 18 to 28, carbon atoms, the 2 radicals R₁ of the 2 surfactants or of the 2 populations of surfactants having a difference in their number of carbon atoms at least equal to or greater than 4,
R₂ and R₃, independently, represent an aliphatic chain having from 1 to 30 carbon atoms, preferably from 1 to 20 carbon atoms, more preferably from 1 to 10 carbon atoms, and yet more preferably from 1 to 6 carbon atoms, it being possible for said aliphatic group to be straight or branched, saturated or unsaturated, the preferred groups R₂ and R₃ being the groups methyl and hydroxymethyl, ethyl and 2-hydroxyethyl, propyl and 3-hydroxypropyl, and
R₄ is an alkylene group having from 1 to 4 carbon atoms, optionally substituted by a hydroxyl group;
b) said fluid containing the oil is recovered using at least one production means situated at a different location from the location at which the polymer was introduced.

2. Method according to claim 1, **characterised in that** in formula (1) R₁ is an alkylamidopropyl, R₂ and R₃ represent a 2-hydroxyethyl, methyl or ethyl group, R₄ represents an alkylene group and A represents a carboxylate group, the viscosifying surfactant preferably corresponding to formula (2): 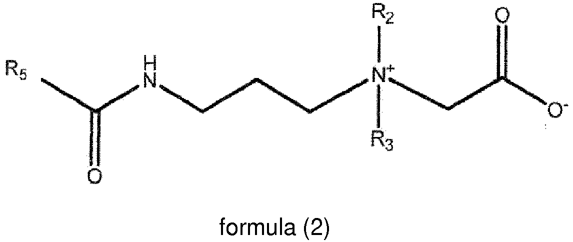 wherein:
R₄ of formula (1) represents a methylene group in formula (2),
R₁ of formula (1) is the alkylamidopropyl group of formula: R5CONHCH2CH2CH2 in formula (2), and
wherein the group R₅-C=O is a C₁₂-C₂₄-alkanoyl group.

3. Method according to claim 1, **characterised in that** in formula (1) R₁ is an alkylamidopropyl, the group R₅-C=O is a C₁₂-C₂₄-alkanoyl group;
R₂ and R₃ represent a 2-hydroxyethyl, methyl or ethyl group, R₄ represents an optionally hydroxylated propylidene group and A represents a sulfonate group and can then, for example, correspond to formula (3): 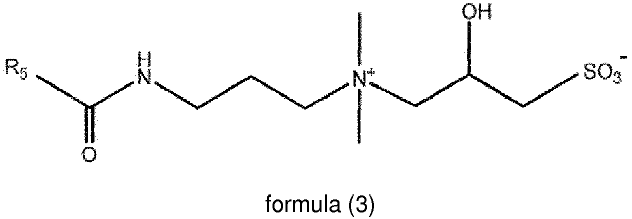 wherein R₂ and R₃ of formula (1) represent a methyl, R₄ of formula (1) represents a hydroxy-propylidene group and A of formula (1) represents a sulfonate group.

4. Method according to claim 1, **characterised in that** in formula (1) R₁ is a C₁₂-C₂₄-alkyl group preferably chosen from the groups dodecyl (lauryl), tetradecyl (myristyl), hexadecyl (cetyl), octadecenyl (oleyl), octadecyl (stearyl), docosenoic (erucyl),
R₂ and R₃ represent a 2-hydroxyethyl, methyl or ethyl group, R₄ is a methylene group and A is a carboxylate group, and the viscosifying surfactant corresponds to formula (4):

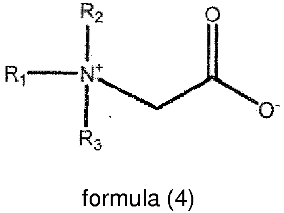

5. Process according to claim 1, **characterised in that** in formula (1) R₄ is an optionally hydroxylated propylidene group, A is a sulfonate group and the viscosifying surfactant corresponds, for example, to formula (5): 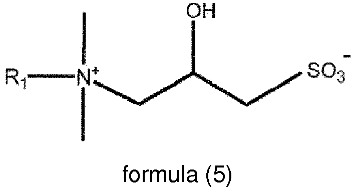 wherein R₂ and R₃ of formula (1) represent a methyl in formula (5), R₄ of formula (1) represents a hydroxy-propylidene group in formula (5) and A of formula (1) represents a sulfonate group in formula (5).

6. Method according to any one of the preceding claims, **characterised in that** the two radicals R₁ can have a difference in their number of carbon atoms which is at least equal to or greater than 4 and less than or equal to 10.

7. Method according to any one of the preceding claims, **characterised in that** the 2 viscosifying zwitterionic surfactants are present in the injected pushing fluid in a ratio by weight in said fluid of from 1 to 20, preferably from 1 to 10 and yet more preferably from 1 to 5.

8. Method according to any one of the preceding claims, **characterised in that** the pushing fluid further comprises:
3) an alcohol or a polyol, preferably ethanol, isopropanol or propylene glycol, in an amount by weight in the pushing fluid of from 0.05 to 1%, preferably from 0.1 to 0.5%.

9. Method according to any one of the preceding claims, **characterised in that** the pushing fluid further comprises:
4) addition of a surfactant that does not impart a viscoelastic property to the fluid.

10. Method according to claim 9, **characterised in that** the non-viscoelastic surfactant is chosen from the anionic, cationic, non-ionic, zwitterionic/- amphoteric surfactants, present in an amount of 0.5% by weight or less, preferably less than 0.1% by weight, relative to the weight of the fluid.

11. Method according to either claim 9 or claim 10, **characterised in that** the viscosifying zwitterionic surfactant is present in an amount of between 0.05 and 5% by weight, preferably between 0.1 and 2% by weight.

12. Method according to any one of claims 3 to 11, **characterised in that** the mixture of viscosifying zwitterionic surfactants is formed substantially of a mixture of 2 surfactants of formula: 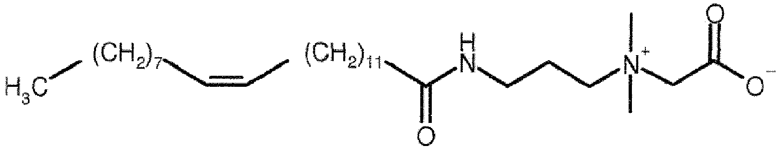 and

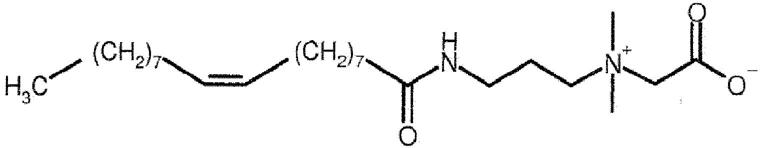

13. Method according to any one of the preceding claims, **characterised in that** the pushing fluid further comprises:
5) a quantity of a base sufficient to bring the pH of the fluid to a value greater than 10, preferably between 11 and 13,
wherein the base is chosen from the alkaline hydroxides, the carbonates, the bicarbonates and the metaborates, for example from sodium hydroxide, potassium hydroxide, sodium carbonate, sodium bicarbonate and sodium metaborate.

14. Method according to claim 13, **characterised in that** the concentration of the base in said fluid is between 0.0001 and 5%, preferably between 0.0002 and 1% by weight.

15. Method according to either claim 13 or claim 14, **characterised in that** the group R₁ comprises at least one ethylenic unsaturation.
